# EUROPÄISCHE PATENTSCHRIFT

(11) **EP 1 213 462 B1**
(45) Veröffentlichungstag und Bekanntmachung des Hinweises auf die Patenterteilung: **28.02.2007**
(21) Anmeldenummer: 01124033.0
(22) Anmeldetag: 09.10.2001
(51) Int. Cl.: F02M 21/02

(54) **Verfahren und Vorrichtung zur Förderung eines kryogen gespeicherten Kraftstoffes**
Method and apparatus for supplying a cryogenic stored fuel
Procédé et appareil d'alimentation d'un carburant cryogénique stocké

(30) Priorität: 07.12.2000 DE 10060791
(43) Veröffentlichungstag der Anmeldung: 12.06.2002
(73) Patentinhaber: Bayerische Motoren Werke Aktiengesellschaft, 80809 München (DE)
(72) Erfinder: Ringler, Jürgen, 86438 Kissing (DE); Fickel, Hans-Christian, 85368 Moosburg (DE)

(56) Entgegenhaltungen:
- DE-A- 3 741 145
- US-A- 2 850 882
- US-A- 3 570 261
- US-A- 4 570 578
- US-A- 4 917 576

## Beschreibung

Die Erfindung betrifft ein Verfahren und eine Vorrichtung zur Förderung eines kryogen gespeicherten Kraftstoffes zu einer Brennkraftmaschine zur Bereitstellung eines brennfähigen Arbeitsgases.

Die Speicherung von niedrig siedenden Kraftstoffen - beispielsweise Wasserstoff - kann in isolierten Tankanordnungen erfolgen. Letztere, auch als Kryo-Tanks bezeichnete Tankanordnungen zeichnen sich neben einem vergleichsweise geringen Eigengewicht auch durch ein günstiges Bauraum/Speicherkapazitäts-Verhältnis aus. Die zur Speicherung des kryogenen d.h. durch Wärmeentzug verflüssigten Kraftstoffes vorgesehenen Tankanordnungen werden üblicherweise befüllt, indem der nachgefüllte Kraftstoff ausreichend unterkühlt ist. Bei Tankanordnungen zur Speicherung von Wasserstoff sind hierbei Kraftstofftemperaturen unterhalb 20K erforderlich. Der Kraftstoff kann in gasförmigem Zustand aus dem Tank abgeleitet und in ein Mischsystem geführt werden in welchem der gasförmige Kraftstoff nach Maßgabe eines vorgegebenen stöchiometrischen Verhältnises mit einem Oxydationsmittel beispielsweise dem in der Umgebungsluft enthaltenen Sauerstoff vermischt wird. Es ist auch möglich, den Kraftstoff in flüssigem Zustand aus dem Tank abzuleiten. Hierzu ist beispielsweise aus DE 696 02 468 T2 eine Kryopumpe bekannt die sich durch einen niedrigen NPSH-Wert auszeichnet und damit eine Förderung des Kraftstoffes nahe dem Siedezustand ermöglicht. Die bekannten Kryopumpen weisen jedoch einen konstruktiv aufwendigen Aufbau auf und leiden nach längeren Lagerzeiten des Kraftstoffes und niedrigem Tankfüllungsgrad, unter einer verminderten Förderleistung.

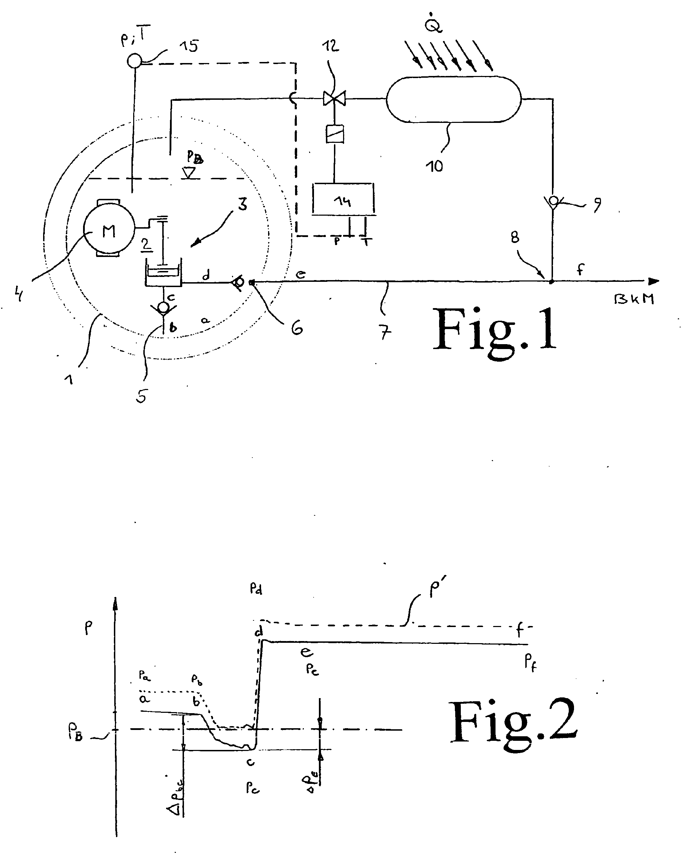

Aus der gattungsbildenden US 2, 850, 882 A und der gleichlautenden DAS 1 100 060 ist jeweils gemäß einem Ausführungsbeispiel nach Fig.3 bzw. nach Fig. 1 eine Vorrichtung bekannt zur Förderung eines kryogen gespeicherten Kraftstoffes in flüssigem Zustand mit einem wärmeisolierten Kraftstoffvorratsbehältnis zur Bevorratung des Kraftstoffes, die ferner eine Fördereinrichtung zur Förderung des Kraftstoffes in eine Kraftstoffleitung umfasst sowie eine Druckerhöhungseinrichtung, mittels der bei Getrieb der Fördereinrichtung zur Erzielung eines sicheren Kraftstoff- Förderverfahrens durch einen Druckschalter gesteuert/geregelt der Druck im Kraftstoffvorratsbehältnis erhöht wird. Nachteilig hierbei ist die allein auf die Erfassung des Tankdruckes abgestellte Tankdruck-Steuerung bzw. Tankdruck-Regelung ohne Berücksichtigung des auch vom jeweiligen Siededruck beeinflussten Tarikdruckes.

Der Erfindung liegt die Aufgabe zugrunde, das bekannte Verfahren und die bekannte Vorrichtung zur Förderung eines kryogen bevorrateten Kraftstoffes zu einer Brennkraftmaschine derart zu verbessern, dass ein ausreichender Kraftstoffzustrom aus dem Kraftstoffbehältnis auf zuverlässige Weise gewährleistet ist.

Diese Aufgabe ist mit dem auf ein Verfahren gerichteten Patentanspruch 1 sowie mit dem zur Durchführung des Verfahrens vorgeschlagenen Vorrichtungsanspruch 12 gelöst.

Mit der Erfindung kann der Kraftstoff in vorteilhafter Weise bis unmittelbar vor Inbetriebnahme des Kraftfahrzeuges zur Eigenkühlung in einem Siedezustand gehalten werden und trotzdem ist bei Entnahme von Kraftstoff das Kraftstoffbehältnis weitgehend zu entleeren. Ferner kann aufgrund der auf zuverlässige Weise beseitigten Kavitationsgefahr auf die bislang erforderlichen Vorfördereinrichtungen verzichtet werden.

In vorteilhafter Weise wird der Druck in dem Kraftstoffvorratsbehältnis auf einen Druckpegel erhöht, der höher liegt als die Summe aus dem Siededruck und dem saugseitigen Druckabfall an der Fördereinrichtung.

Gemäß einer besonders bevorzugten Ausführungsform der Erfindung erfolgt die Erhöhung des Druckes in dem Kraftstoffvorratsbehältnis durch Einspeisen von gasförmigem Kraftstoff in das Kraftstoffvorratsbehältnis. Der in das Kraftstoffvorratsbehältnis eingespeiste gasförmige Kraftstoff wird vorzugsweise aus einem Druckspeicher in das Kraftstoffvorratsbehältnis abgeleitet.

Der in das Kraftstoffvorratsbehältnis eingespeiste gasförmige Kraftstoff kann in vorteilhafter Weise von einer stromabwärts der Fördereinrichtung liegenden Stelle der Kraftstoffleitung abgezweigt werden, wobei der abgezweigte Kraftstoff erwärmt und hierbei verdampft wird. Die dem abgezweigten Kraftstoff zugeführte Wärme kann vorzugsweise über einen als Verdampfer ausgebildeten Wärmetauscher aus der Umgebung bezogen werden.

Gemäß einer besonders bevorzugten Ausführungsform der Erfindung wird die Fördereinrichtung von einem Motor angetrieben, der in dem Kraftstoffvorratsbehältnis angeordnet, und durch den Kraftstoff gekühlt ist. Die Fördereinrichtung befördert den Kraftstoff vorzugsweise auf ein Druckniveau, das im Bereich eines Brennraumeinspeisedruckes liegt. Dadurch wird es möglich, das brennfähige Arbeitsgas im Rahmen eines inneren Gemischbildungsvorganges in dem Brenn- oder Arbeitsraum einer Brennkraftmaschine zu bilden.

Vorzugsweise wird unmittelbar nach Abschalten der Fördereinrichtung der Druck in dem Tank auf den durch die Kraftstofftemperatur bestimmten Siededruck abgesenkt. Hierdurch wird es möglich, den Kraftstoff durch Eigenverdampfung zu kühlen. Diese Eigenverdampfung wird vorzugsweise durch anhaltende Regelung des Tankdruckes kontrolliert. Der hierbei in den gasförmigen Zustand wechselnde Kraftstoff kann einem Nebenverbraucher insbesondere einer Brennstoffzelle, einer Standheizung, oder einer APU zugeführt werden. Es ist möglich, durch den freiwerdenden Kraftstoff ein Kühlsystem zu betreiben, durch welches eine zusätzliche Kühlung des Tankinhaltes erreicht wird.

In vorrichtungstechnischer Hinsicht wird die eingangs angegebene Aufgabe erfindungsgemäß gelöst durch eine Vorrichtung zur Förderung eines kryogen gespeicherten Kraftstoffes in flüssigem Zustand zu einer Brennkraftmaschine mit einem wärmeisolierten Kraftstoffvorratsbehältnis zur Bevorratung des Kraftstoffes, einer Fördereinrichtung zur Förderung des Kraftstoffes in eine Kraftstoffleitung, ferner einer Messeinrichtung für die Kraftstofftemperatur sowie einer gemessene Kraftstofftemperaturen verarbeitenden Druckerhöhungeinrichtung zur selektiven Erhöhung des Druckes in dem Kraftstoffvorratsbehältnis um einen Druckbetrag, der größer ist als die Differenz zwischen einem saugseitig an der Fördereinrichtung entstehenden Zustrom-Druckabfall und dem Differenzbetrag zwischen dem im Tank an einer Pumpenzulaufstelle herrschenden Tankdruck und dem durch die momentane, gemessene Kraftstofftemperatur bestimmten Siededruck.

Hierdurch wird es möglich, den Kraftstoff auf zuverlässige Weise zu fördern, ohne daß die Gefahr besteht, daß die Förderleistung durch Kavitationserscheinungen beeinträchtigt wird.

Die Druckerhöhungseinrichtung umfaßt vorzugsweise einen Kraftstoffspeicher, zur Speicherung des Kraftstoffes in gasförmigem Zustand auf einem gegenüber dem Tankdruck erhöhten Druckpegel. Vorzugsweise ist eine Ventileinrichtung vorgesehen, zur Steuerung der Einspeisung des gasförmigen Kraftstoffes in das Kraftstoffvorratsbehältnis. Die Ventileinrichtung kann nach Maßgabe einer Steuereinrichtung gesteuert werden, so daß der in dem Tank herrschende Tankdruck einem definierten Regelungskonzept folgt.

Zur Zufuhr von Wärme zu einem von der Kraftstoffleitung abgezweigten Kraftstoffteilstrom ist vorzugsweise eine Verdampfereinrichtung vorgesehen. Vor dieser Verdampfereinrichtung kann in vorteilhafter Weise eine Rückschlagventileinrichtung angeordnet sein, zum Sperren einer Rückströmung in die Kraftstoffleitung.

Die Fördereinrichtung ist vorzugsweise als hydrostatische Fördereinrichtung ausgebildet. Hierdurch lassen sich bei vergleichsweise geringem Leistungsbezug er Fördereinrichtung hohe Förderdrücke erzeugen. Als hydrostatische Fördereinrichtungen eignen sich insbesondere Kolben, Zahnrad und/oder Membranpumpen. Vorzugsweise werden die saugseitig vorgesehenen Ventilorgane durch Antriebsorgane betätigt, so daß an diesen Ventilorganen kein erheblicher Druckabfall herrscht.

Die Fördereinrichtung ist vorzugsweise in dem Kraftstofftank angeordnet und umfaßt einen Elektromotor der eine nahezu supraleitende Motorwicklung aufweist.

Weitere vorteilhafte Einzelheiten der Erfindung ergeben sich aus der nachfolgenden Beschreibung in Verbindung mit der Zeichnung. Es zeigen:
**Fig.1** eine Schema-Darstellung einer bevorzugten Ausführungsform eines erfindungsgemäßen, Systems zur selektiven Erhöhung des Druckes in einem Kraftstoffvorratsbehältnis;
**Fig.2** ein Diagramm zur Erläuterung des statischen Kraftstoffdruckes auf einem Stromfaden vom Kraftstoffvorratsbehältnis durch die Fördereinrichtung in die Kraftstoffleitung.

Das in Figur 1 schematisch dargestellte System umfaßt einen thermisch isolierten Kryo-Tank 1 in welchem ein verflüssigter, gekühlter Wasserstoff bevorratet ist. Bei dem hier gezeigten System ist der Kraftstoff auf eine Temperatur von 24K abgekühlt. Im Inneren des Kryo-Tanks 1 herrscht hierbei ein Druck von 4,5 bar.

Im Inneren des Kryo-Tankes 1 befindet sich eine Fördereinrichtung 2 die hier eine hydrostatische Pumpe 3 und eine Antriebseinrichtung 4 umfaßt. Die hydrostatische Pume 3 umfaßt einen saugseitigen Einlaßbereich 5 zum Ansaugen des Kraftstoffes sowie einen druckseitigen Auslaßbereich 6 zur Abgabe des Kraftstoffes unter einem gegenüber dem Tankdruck erhöhten Abgabedruck.

Die Antriebseinrichtung 4 umfaßt hier vorzugsweise einen Elektromotor dessen Wicklungen aus einem nahezu supraleitenden Material gefertigt sind. Der Elektromotor ist im inneren des Tankes derart angeordnet, daß dieser durch den Kraftstoff selbst gekühlt ist. Die Spannungsversorgung erfolgt über isolierend in den Tank 1 eingeführte elektrische Leiter.

An den Außlaßbereich 6 der Pumpe 3 ist eine Kraftstoffleitung 7 angeschlossen, über welche der geförderte Kraftstoff zu einem Einspritzsystem einer Brennkraftmaschine geleitet wird.

Die Kraftstoffleitung 7 ist mit einer Abzweigung 8 versehen, über welche ein Kraftstoffteilstrom aus der Kraftstoffleitung 7 abzweigbar ist. Dieser Kraftstoffteilstrom gelangt infolge des in der Kraftstoffleitung 7 herrschenden Förderdruckes über eine Rückschlagventileinrichtung 9 in einen Verdampfer 10. In diesem Verdampfer 10 wird der abgezweigte Kraftstoff erwärmt und verdampft hierbei. Der sich einstellende Druck kann aufgrund der Rückschlagventileinrichtung 9 zeitweilig über dem Druckpegel in der Kraftstoffleitung 7 liegen. Es ist möglich, den Verdampfer 10 als Druckkessel auszubilden, so daß in dem Druckkessel eine größere Menge an gasförmigem Kraftstoff auf einem Druckniveau wenigstens im Bereich des Kraftstoffdruckes in der Kraftstoffleitung 7 gespeichert werden kann. Es ist möglich, die Speicherkapazität zusätzlich beispielsweise durch Metall-Hybrid-Strukturen zu vergrößeren.

Über eine Speiseventilanordnung 12 ist es möglich, den in dem Verdampfer 10 generierten gasförmigen Kraftstoff gesteuert in den Kryo-Tank 1 einzuspeisen. Diese Einspeisung erfolgt vorzugsweise nach Maßgabe einer Tankdrucksteuereinrichtung 14. Die Tankdrucksteuereinrichtung verarbeitet vorzugsweise wenigstens hinsichtlich des Tankdruckes und/oder der Kraftstofftemperatur repräsentative Signale. Diese Signale werden vorzugsweise durch mehrfach redundant vorgesehenen Sensoren 15, vorzugsweise unter Berücksichtigung der Füllhöhe, generiert.

In Fig. 2 ist qualitativ der Verlauf des statischen Druckes auf einem Stromfaden dargestellt der die in Fig.1 dargestellten Orte a, b, c, d, e, f miteinander verbindet und sich hierbei aus dem Tank 1, durch die Pumpe 3 hindurch, in die Kraftstoffleitung 7, erstreckt.

Am Ort a herrscht ein statischer Druck pₐ der dem statischen Druck im Tank 1 auf Höhe des Pumpeneinlasses 5 entspricht. Dieser Druck liegt füllhöhenbedingt über einem Kraftstoff-Siededruck p_{b} der durch die Temperatur des Kraftstoffes bestimmt ist. Unmittelbar an der Eintrittsöffnung des Pumpeneinlasses 5 herrscht ein statischer Druck p_{b} der bedingt durch die Strömungsgeschwindigkeit des Kraftstoffes geringfügig niedriger ist als der Druck pₐ. Im Inneren des Pumpeneinlasses 5 fällt der Druck ab bis auf einen minimalen Druck p_{c} der hier während einer Saugphase hinter einem Rückschlagventil herrscht. Während einer Förderphase wird der Druck in dem vorangehend über das Rückschlagventil angesaugten Kraftstoff auf einen Druck p_{d} erhöht. Hierbei öffnet sich ein pumpenauslaßseitiges Rückschlagventil und der Kraftstoff gelangt unter dem statischen Druck pₑ in die Kraftstoffleitung 7. Entlang der Kraftstoffleitung 7 erfolgt nur ein geringer Abfall des Druckes auf einen Druck p_{f}. Der Druck p_{f} kann je nach Auslegung der Pumpe 3 auf einem hohen Pegel von beispielsweise 15 bar liegen. An der Abzweigungsstelle 8 kann ein Kraftstoffstrom zu dem Verdampfer 10 hin abgezweigt werden. Die Zuströmung des Kraftstoffes zu dem Verdampfer kommt zum Erliegen, sobald in dem Verdampfer 10 ein Druck herrscht der dem Förderdruck in der Kraftstoffleitung entspricht. In diesem Zustand gelangt das Rückschlagventil 9 wieder in eine Sperrstellung. Der in den Verdampfer gelangte und hierin verdampfte Kraftstoff kann über die Speiseventileinrichtung 12 dosiert in den Tank 1 eingespeist werden.

Die Einspeisung erfolgt nach Maßgabe einer seitens der Steuereinrichtung 14 abgearbeiteten Regelstrategie. Hierbei kann der Füllstand des Tankes 1 und der durch die Bauart der Pumpe 3 bedingte, in deren Ansaugbereich auftretende Druckabfall berücksichtigt werden. Ergibt beispielsweise eine Auswertung der Tankdrucksignale, der Kraftstofftemperatursignale und des Tankfüllstandes, daß zu erwarten ist, daß bei Betrieb der Pumpe in dem Kraftstoff statische Drücke unterhalb des Siededruckes entstehen können so kann über die Einspeiseeinrichtung in dem Tank 1 eine Druckerhöhung um einen Differenzdruckbetrag Δp_{E} veranlaßt werden wobei Δp_{E} wenigstens der Differenz zwischen dem Siededruck und dem minimalen Druck auf dem Stromfaden (hier pc) entspricht. Hierdurch wird der Druckverlauf entlang des Stromfadens auf ein Niveau angehoben wie dies durch die in Fig. 2 eingezeichnete Strichlinie p' angedeutet ist.

Neben Wasserstoff eignet sich die erfindungsgemäße Lösung auch für andere niedrig siedende Kraftstoffe insbesondere Kohlenwasserstoffverbindungen. Die erfindungsgemäße Vorrichtung kann auch zur Förderung des Kraftstoffes beispielsweise zu einer Brennstoffzelle Anwendung finden.

## Patentansprüche

1. Verfahren zur Förderung eines kryogen gespeicherten Kraftstoffes in flüssigem Zustand, bei welchem der Kryo-Kraftstoff aus einem wärmeisolierten Kraftstoffvorratsbehältnis entnommen wird und über eine Fördereinrichtung in eine Kraftstoffleitung gedrängt wird, wobei zumindest im Rahmen des Betriebs der Fördereinrichtung der Druck in dem Kraftstoffvorratsbehättnis durch von einer Tankdruck-Steuerung (14) gesteuertes/geregeltes Einspeisen eines Gases in das Kraftstoffvorratsbehältnis erhöht wird,
**dadurch gekennzeichnet,**
**dass** in der Tankdruck-Steuereinrichtung (14) zusätzlich mittels eines Sensors generierte Signale für Kraftstofftemperaturen mitverarbeitet werden, wobei mittels der Tankdruck-Steuereinrichtung (14) der Druck in dem Kraftstoffvorratsbehältnis um einen Druckbetrag Δp_{E} erhöht wird, der größer ist als die Differenz zwischen einem saugseitig in/an der Fördereinrichtung entstehenden Zustrom-Druckabfall Δp_{bc} und dem Differenzbetrag zwischen dem im Tank an einer Pumpenzulaufstelle herrschenden Tankdruck p_{b} und dem der gemessenen kraftstofftemperatur entsprechenden Siededruck p_{B}.

2. Verfahren nach Anspruch 1, **dadurch gekennzeichnet, daß** der Druck in dem Kraftstoffvorratsbehältnis auf einen Druckpegel erhöht wird, der höher liegt als die Summe des durch die momentane Kraftstofftemperatur bestimmten Siededruckes und dem Betrag des maximalen saugseitigen Druckabfalls an der Fördereinrichtung.

3. Verfahren nach Anspruch 1 oder 2, **dadurch gekennzeichnet, daß** die Erhöhung des Druckes in dem Kraftstoffvorratsbehältnis durch Einspeisen von gasförmigem Kraftstoff in das Kraftstoffvorratsbehältnis erfolgt.

4. Verfahren nach wenigstens einem der Ansprüche 1 bis 3, **dadurch gekennzeichnet, daß** der in das Kraftstoffvorratsbehältnis eingespeiste gasförmige Kraftstoff aus einem Druckspeicher in das Kraftstoffvorraisbehäitms abgeleitet wird.

5. Verfahren nach wenigstens einem der Ansprüche 1 bis 4, **dadurch gekennzeichnet, daß** der in das Kraftstoffvorratsbehältnis eingespeiste gasförmige Kraftstoff von einer stromabwärts der Fördereinrichtung liegenden Stelle der Kraftstoffleitung abgezweigt wird, und daß der abgezweigte Kraftstoff erwärmt und hierbei verdampft wird.

6. Verfahren nach wenigstens einem der Ansprüche 1 bis 5, **dadurch gekennzeichnet, daß** die dem abgezweigten Kraftstoff zugeführte Wärme aus der Umgebung bezogen wird.

7. Verfahren nach wenigstens einem der Ansprüche 1 bis 6, **dadurch gekennzeichnet, daß** die Fördereinrichtung von einem Motor angetrieben wird, der in dem Kraftstoffvorratsbehältnis angeordnet, und durch den Kraftstoff gekühlt ist.

8. Verfahren nach wenigstens einem der Ansprüche 1 bis 7, **dadurch gekennzeichnet, daß** die Fördereinrichtung den Kraftstoff auf ein Druckniveau befördert, das im Bereich eines Brennraumeinspeisedruckes liegt.

9. Verfahren nach wenigstens einem der Ansprüche 1 bis 8, **dadurch gekennzeichnet, daß** nach Abschalten der Fördereinrichtung der Druck in dem Tank auf den durch die Kraftstofftemperatur bestimmten Siededruck abgesenkt wird.

10. Verfahren nach wenigstens einem der Ansprüche 1 bis 9, **dadurch gekennzeichnet, daß** nach Abschalten der Fördereinrichtung der Kraftstoff durch gesteuerte Verdampfung von Kraftstoff gekühlt wird.

11. Verfahren nach wenigstens einem der Ansprüche 1 bis 10, **dadurch gekennzeichnet, daß** der gesteuert verdampfte Kraftstoff einem Nebenverbraucher insbesondere einer Brennstoffzelle, einer Standheizung, oder einer APU zugeführt wird.

12. Vorrichtung zur Förderung eines kryogen gespeicherten Kraftstoffes in flüssigem Zustand zu einer Brennkraftmaschine mit einem wärmeisolierten Kraftstoffvorratsbehältnis (1) zur Bevorratung des Kraftstoffes, einer Fördereinrichtung (2) zur Förderung des Kraftstoffes in eine Kraftstoffleitung (7), **dadurch gekennzeichnet, dass** einer Messeinrichtung (15) für die Kraftstofftemperatur sowie einer gemessene Kraftstofftemperaturen verarbeitenden Druckerhöhungseinrichtung (10) zur selektiven Erhöhung des Druckes in dem Kraftstoffvorrätsbehältnis (1) um einen Druckbetrag der größer ist, als die Differenz zwischen einem saugseitig an der Fördereinrichtung (2) entstehenden Zustrom-Druckabfall und dem Differenzbetrag zwischen dem im Tank (1) an einer Pumpenzulaufstelle(5) herrschenden Tankdruck und dem durch die momentane, gemessene Kraftstofftemperatur bestimmten Siededruck.

13. Vorrichtung nach Anspruch 12, **dadurch gekennzeichnet, daß** die Druckerhöhungseinrichtung einen Kraftstoffspeicher umfaßt, zur Speicherung des Kraftstoffes in gasförmigem Zustand auf einem gegenüber dem Tankdruck erhöhten Druckpegel.

14. Vorrichtung nach Anspruch 12 oer 13, **dadurch gekennzeichnet, daß** eine Ventileinrichtung vorgesehen ist, zur Steuerung der Einspeisung des gasförmigen Kraftstoffes in das Kraftstoffvorratsbehältnis.

15. Vorrichtung nach wenigstens einem der Ansprüche 12 bis 14, **dadurch gekennzeichnet, daß** eine Verdampfereinrichtung vorgesehen ist, zur Zufuhr von Wärme zu einem von der Kraftstoffleitung abgezweigten Kraftstoffteilstrom.

16. Vorrichtung nach wenigstens einem der Ansprüche 12 bis 15, **dadurch gekennzeichnet, daß** vor der Verdampfereinrichtung eine Rückschlagventileinrichtung vorgesehen ist, zum Sperren einer Rückströmung in die Kraftstoffleitung.

17. Vorrichtung nach wenigstens einem der Ansprüche 12 bis 16, **dadurch gekennzeichnet, daß** die Fördereinrichtung als Kolbenpumpe ausgebildet ist.

18. Vorrichtung nach wenigstens einem der Ansprüche 12 bis 16, **dadurch gekennzeichnet, daß** die Fördereinrichtung als Zahnradpumpe ausgebildet ist.

19. Vorrichtung nach wenigstens einem der Ansprüche 12 bis 18, **dadurch gekennzeichnet, daß** die Fördereinrichtung in dem Kraftstofftank angeordnet ist.

20. Vorrichtung nach wenigstens einem der Ansprüche 12 bis 19, **dadurch gekennzeichnet, daß** die Fördereinrichtung einen Elektromotor umfaßt der eine supraleitende Motorwicklung aufweist.

## Claims

1. A method of delivering a cryogenically stored fuel in liquid form, wherein the cryogenic fuel is taken from a heat-insulated storage container and driven by a delivery device into a fuel pipe, wherein the pressure in the fuel storage container, at least during operation of the delivery device, is increased by injecting a gas into the fuel storage container, under open-loop/closed-loop control by a tank pressure control system (14),
**characterised in that**
in the tank pressure control device (14), signals for fuel temperatures generated by a sensor are additionally processed wherein, by means of the tank pressure control device (14), the pressure in the fuel storage container is increased by an amount p_{E} greater than the difference between an inflow pressure drop p_{bc} occurring at or in the delivery device on the suction side and the difference between the boiling pressure p_{B} corresponding to the measured fuel temperature and the pressure p_{b} in the tank at a pump inlet.

2. A method according to claim 1, **characterised in that** the pressure in the fuel storage container is raised to a level higher than the sum of the boiling pressure determined via the instantaneous fuel temperature and the maximum pressure drop at the delivery device on the suction side.

3. A method according to claim 1 or claim 2, **characterised in that** the pressure increase in the fuel storage container is obtained by injecting gaseous fuel into the container.

4. A method according to at least one of claims 1 to 3, **characterised in that** gaseous fuel injected into the fuel storage container is diverted from a fuel reservoir into the fuel storage container.

5. A method according to at least one of claims 1 to 4, **characterised in that** the gaseous fuel injected into the fuel storage container is branched off from the fuel line at a place downstream of the delivery device, and the branched-off fuel is evaporated by heating.

6. A method according to at least one of claims 1 to 5, **characterised in that** the heat supplied to the branched-off fuel is taken from the environment.

7. A method according to at least one of claims 1 to 6, **characterised in that** the delivery device is driven by a motor disposed in the fuel storage container and cooled by the fuel.

8. A method according to at least one of claims 1 to 7, **characterised in that** the delivery device delivers the fuel at a pressure in the neighbourhood of a combustion-chamber injection pressure.

9. A method according to at least one of claims 1 to 8, **characterised in that** after the delivery device has been switched off, the pressure in the tank is lowered to the boiling pressure determined by the fuel temperature.

10. A method according to at least one of claims 1 to 9, **characterised in that** after the delivery device has been switched off, the fuel is cooled by controlled evaporation thereof.

11. A method according to at least one of claims 1 to 10, **characterised in that** the fuel evaporated in controlled manner is supplied to an additional consumer, particularly a fuel cell, an auxiliary heater or an APU (auxiliary power unit).

12. A device for delivering a cryogenically stored fuel in liquid form to an internal combustion engine, comprising a heat-insulated fuel storage container (1) for storing the fuel, a delivery device (2) for delivering the fuel to a fuel pipe (7), **characterised in that** (sic) [by] a device (15) for measuring the fuel temperature and a pressure-increasing device (10) for processing measured fuel temperatures so as selectively to increase the pressure in the fuel storage container (1) by an amount greater than the difference between an inflow pressure drop occurring at the delivery device (2) at the suction side and the difference between the pressure in the tank (1) at a pump inlet (5) and the boiling pressure determined by the instantaneous measured fuel temperature.

13. A device according to claim 12, **characterised in that** the pressure-increasing device comprises a fuel reservoir for storing the fuel in gaseous form at a temperature greater than the tank pressure.

14. A device according to claim 12 or claim 13, **characterised in that** a valve device is provided for controlling the injection of gaseous fuel into the fuel storage container.

15. A device according to at least one of claims 12 to claim 14, **characterised in that** an evaporator is provided for supplying heat to a part-flow of fuel branched off from the fuel pipe.

16. A device according to at least one of claims 12 to claim 15, **characterised in that** a non-return valve arrangement is provided in front of the evaporator in order to block a flow back into the fuel pipe.

17. A device according to at least one of claims 12 to claim 16, **characterised in that** the delivery device is a piston pump.

18. A device according to at least one of claims 12 to claim 16, **characterised in that** the delivery device is a geared pump.

19. A device according to at least one of claims 12 to claim 18, **characterised in that** the delivery device is disposed in the fuel tank.

20. A device according to at least one of claims 12 to claim 19, **characterised in that** the delivery device comprises an electric motor with a superconducting winding.

## Revendications

1. Procédé pour refouler un carburant cryogénique stocké à l'état liquide selon lequel le carburant cryogénique est prélevé d'un réservoir de carburant isolé thermiquement et forcé par une l'installation de refoulement dans une conduite de carburant, la pression dans le réservoir de carburant étant augmentée, au moins dans le cadre du fonctionnement de l'installation de refoulement, par l'addition d'un gaz dans le réservoir de carburant commandée/régulée par une commande de pression de réservoir (14),
**caractérisé en ce que**
le dispositif de commande de pression de réservoir (14) traite en outre des signaux de température de carburant générés par un capteur, le dispositif de commande de pression de réservoir (14) augmentant la pression dans le réservoir de carburant d'une valeur de pression Δp_{E} supérieure à la différence entre une baisse de pression d'afflux Δp_{bc} engendrée côté aspiration dans/ sur l'installation de refoulement et la valeur de différence entre une pression de réservoir p_{b} régnant dans le réservoir au niveau d'un point d'admission de pompe et la pression d'ébullition p_{B} correspondant à la température de carburant mesurée.

2. Procédé selon la revendication 1,
**caractérisé en ce que**
la pression dans le réservoir de carburant est augmentée à un niveau de pression supérieur à la somme de la pression d'ébullition déterminée par la température de carburant momentanée et de la valeur de la baisse de pression maximale côté aspiration au niveau de l'installation de refoulement.

3. Procédé selon la revendication 1 ou 2,
**caractérisé en ce que**
l'augmentation de la pression dans le réservoir de carburant s'effectue en ajoutant du carburant gazeux dans le réservoir de carburant.

4. Procédé selon au moins l'une des revendications 1 à 3,
**caractérisé en ce que**
le carburant gazeux ajouté dans le réservoir de carburant est dévié depuis un accumulateur de pression dans le réservoir de carburant.

5. Procédé selon au moins l'une des revendications 1 à 4,
**caractérisé en ce que**
le carburant gazeux ajouté dans le réservoir de carburant est dévié depuis un point de la conduite de carburant situé en aval de l'installation de refoulement, et le carburant dévié est chauffé et ainsi évaporé.

6. Procédé selon au moins l'une des revendications 1 à 5,
**caractérisé en ce que**
la chaleur amenée dans le carburant dévié provient de l'environnement.

7. Procédé selon au moins l'une des revendications 1 à 6,
**caractérisé en ce que**
l'installation de refoulement est entraînée par un moteur disposé dans le réservoir de carburant et refroidi par le carburant.

8. Procédé selon au moins l'une des revendications 1 à 7,
**caractérisé en ce que**
l'installation de refoulement refoule le carburant à un niveau de pression de l'ordre de celle d'admission dans la chambre de combustion.

9. Procédé selon au moins l'une des revendications 1 à 8,
**caractérisé en ce qu'**
après l'arrêt de l'installation de refoulement, la pression dans le réservoir est baissée à la pression d'ébullition déterminée par la température de carburant.

10. Procédé selon au moins l'une des revendications 1 à 9,
**caractérisé en ce qu'**
après l'arrêt de l'installation de refoulement, le carburant est refroidi par évaporation commandée de carburant.

11. Procédé selon au moins l'une des revendications 1 à 10,
**caractérisé en ce que**
le carburant évaporé de façon commandée est amené vers un consommateur secondaire, en particulier une pile à combustible, un chauffage auxiliaire ou un APU.

12. Dispositif pour refouler un carburant cryogénique stocké à l'état liquide vers un moteur à combustion interne, comprenant un réservoir de carburant (1) isolé thermiquement pour stocker le carburant, une installation de refoulement (2) pour refouler le carburant dans une conduite de carburant (7),
**caractérisé par**
un dispositif de mesure (15) pour la température de carburant ainsi qu'un dispositif d'augmentation de pression (10) traitant des températures de carburant mesurées augmenter sélectivement de la pression dans le réservoir de carburant (1) d'une valeur de pression supérieure à la différence entre une baisse de pression d'afflux générée côté aspiration sur l'installation de refoulement (2) et la valeur de différence entre la pression de réservoir régnant dans le réservoir (1) à un point d'admission de pompe (5) et la pression d'ébullition déterminée par la température de carburant momentanée, mesurée.

13. Dispositif selon la revendication 12,
**caractérisé en ce que**
le dispositif d'augmentation de pression comprend un accumulateur de carburant pour stocker le carburant à l'état gazeux à un niveau de pression supérieur à la pression de réservoir.

14. Dispositif selon la revendication 12 ou 13,
**caractérisé en ce qu'**
un dispositif de soupapes est prévu pour commander l'alimentation du carburant gazeux dans le réservoir de carburant.

15. Dispositif selon au moins l'une des revendications 12 à 14,
**caractérisé en ce qu'**
un dispositif d'évaporation est prévu pour amener de la chaleur dans un courant partiel de carburant dévié de la conduite de carburant.

16. Dispositif selon au moins l'une des revendications 12 à 15,
**caractérisé en ce qu'**
un dispositif de clapet anti-retour est prévu en amont du dispositif d'évaporation pour bloquer un reflux dans la conduite de carburant.

17. Dispositif selon au moins l'une des revendications 12 à 16,
**caractérisé en ce que**
l'installation de refoulement est une pompe à piston.

18. Dispositif selon au moins l'une des revendications 12 à 16,
**caractérisé en ce que**
l'installation de refoulement est une pompe à engrenage.

19. Dispositif selon au moins l'une des revendications 12 à 18,
**caractérisé en ce que**
l'installation de refoulement est disposée dans le réservoir de carburant.

20. Dispositif selon au moins l'une des revendications 12 à 19,
**caractérisé en ce que**
l'installation de refoulement comprend un moteur électrique muni d'un bobinage de moteur supraconducteur.
